# EUROPÄISCHE PATENTSCHRIFT

(11) **EP 0 322 754 B1**
(45) Veröffentlichungstag und Bekanntmachung des Hinweises auf die Patenterteilung: **08.09.1993**
(21) Anmeldenummer: 88121462.1
(22) Anmeldetag: 22.12.1988
(51) Int. Cl.: B29C 45/84

(54) **Schutzabdeckung an einer Kunststoff-Spritzgiessmaschine**
Protecting cover for a plastic-injection-moulding machine
Capot de protection pour une machine à injecter des matières plastiques

(30) Priorität: 30.12.1987 DE 3744523
(43) Veröffentlichungstag der Anmeldung: 05.07.1989
(73) Patentinhaber: Hehl, Karl, 72290 Lossburg (DE)
(72) Erfinder: Hehl, Karl, 72290 Lossburg (DE)
(74) Vertreter: Mayer, Friedrich E.

(56) Entgegenhaltungen:
- DE-A- 3 632 449
- DE-C- 3 242 173
- FR-A- 2 488 186
- KUNSTSTOFFE, Band 77, Nr. 2, Februar 1987, Seiten 177-187, Carl Hanser Verlag, München, DE; J. ROTHE: "Spritzgiessen-Maschinen und Peripherie"

## Beschreibung

Die Erfindung betrifft eine Schutzabdeckung entsprechend dem Oberbegriff des Patentanspruches 1.

Bei einer bekannten Schutzabdeckung dieser Art (Firmenschrift "Flexible Production Systems - Automated production in injection moulding" der Battenfeld Maschinenfabriken GmbH) bilden die Profilschienen mit den Trägersäulen ein Traggerüst für die verfahrbaren Schutztüren. Dabei ist jedoch eine Anpassung des Traggerüstes an unterschiedliche Automatisierungsgrade der Kunststoff-Spritzgießmaschine weder vorgesehen noch möglich, weil eine solche Anpassung eine stufenweise Zerlegung des Traggerüstes voraussetzt. Zudem beansprucht das Traggerüst relativ viel Platz, weil im Traggerüst die Profilschiene, die Führungsstange und die Schutztüre nebeneinander angeordnet sind, wodurch der freie Raum zwischen der bedienungsseitigen und der rückwärtigen Profilschiene eingeschränkt ist.

Bei einer weiteren Schutzabdeckung dieser Art (ältere Patentanmeldung P 36 32 449.3) ist das Schließaggregat der Werkzeugschließeinheit mittels einer stationären, im Querschnitt portalartig ausgebildeten Schutzhaube, also auch von oben abgeschirmt. Dasselbe gilt für den Werkzeug-Bereich der Werkzeugschließeinheit, welcher mit Hilfe seitlicher, vertikaler und einer oberen horizontalen Schutztüre abdeckbar ist. Die Schutztüren können aus ihrer Schutzposition unter die korrespondierenden Deckbereiche der Schutzhaube eingefahren werden. Ein portalartiges, stationäres Traggerüst für die gesamte Schutzabdeckung der Werkzeugschließeinheit ist aus gußeisernen Formstücken zusammengefügt, die mit relativ kurzen Führungsmuffen für die Schutztüren versehen sind. Gleitstangen der Schutztüren sind in den Führungsmuffen horizontal geführt. Das gleiche gilt für die den Plastifizierzylinder bedienungsseitig abdeckende Schutztüre, deren Führungsmuffen an einer gußeisernen vertikalen Trägersäule angeordnet sind. Die Gleitstangen aller Schutztüren sind im Abstand von deren oberen und unteren Längskanten angeordnet. Die Höhe der (auch aus der DE 30 29 629 C2 bekannten) Schutzabdeckung der Werkzeug-Schließeinheit kann im Hinblick darauf relativ gering bemessen sein, daß ein unbefugter Eingriff in die unfallkritischen Bereiche der Werkzeugschließeinheit von oben wegen der diesbezüglichen horizontalen Abdeckung ausgeschlossen ist.

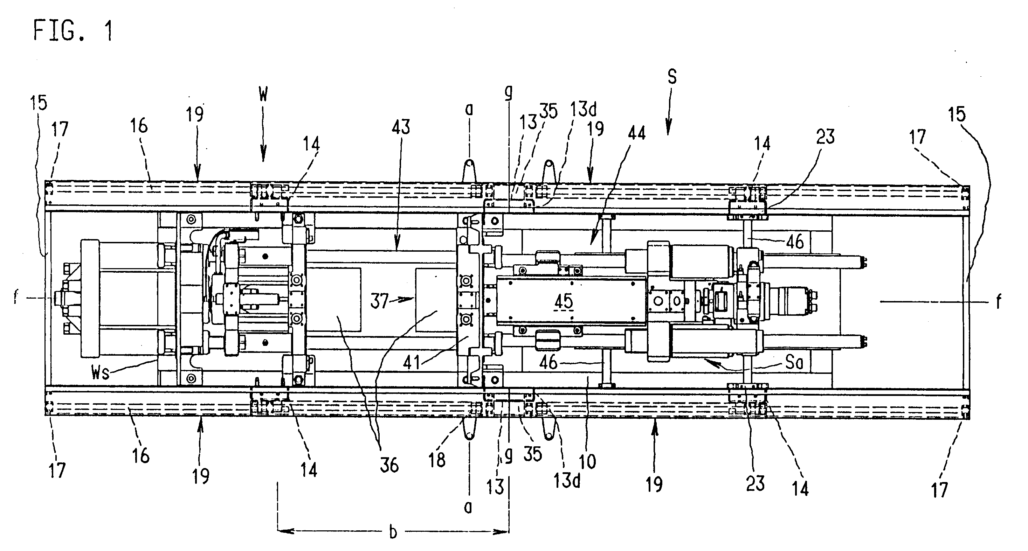

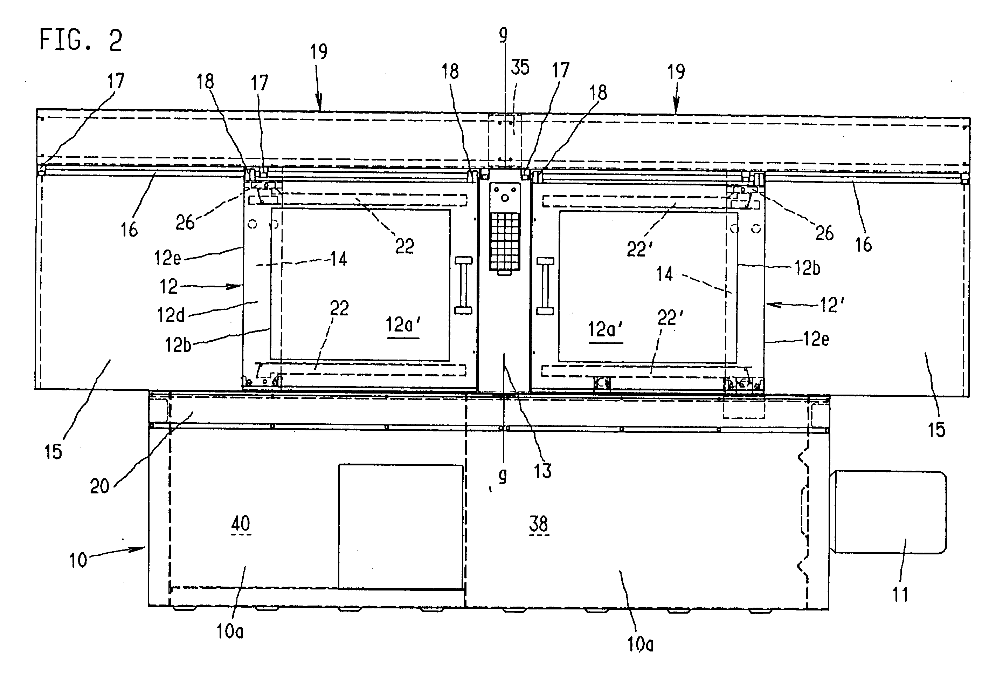

Der Erfindung liegt die Aufgabe zugrunde, eine Schutzabdeckung der eingangs genannten Art derart weiterzubilden, daß günstigere Voraussetzungen für eine rationelle Serienfertigung vorliegen und daß mit ihr darüber hinaus unterschiedlichen Abdeckungserfordernissen Rechnung getragen werden kann, welche durch unterschiedliche Automatisierungsgrade der Kunststoff-Spritzgießmaschine und/oder unterschiedliche Arten der Aufstellung dieser Maschinen (z.B. Einzelaufstellung oder Aufstellung im Verband unter Bildung von eingeschlossenen Transportstraßen gemäß Figuren 1, 2 des Patentes 36 32 449) bedingt sind.

Unterschiedliche Abdeckungserfordernisse im Sinne der Aufgabe können sich z.B. wie folgt ergeben: Ein Käufer will eine Kunststoff-Spritzgießmaschine erwerben, ohne daß ein Bedarf für einen programmgesteuerten Wechsel des Werkzeuges und/oder der Plastifiziereinheit (je bei horizontalem Abtransport)vorliegt.

Ein anderer Käufer verlangt eine vollautomatisch arbeitende Kunststoff-Spritzgießmaschine, die auf ihrer Rückseite mit einem mit Schutzabdeckung versehenen 'Wechseltisch' für den Wechsel des Werkzeuges bzw. der Plastifiziereinheit ausgerüstet ist. In beiden Fällen (mit oder ohne Programmsteuerung) liegen wiederum unterschiedliche Abdeckungserfordernisse vor, je nachdem ob die betreffende Maschine einzeln und von allen Seiten zugänglich oder im Verband (z.B. ältere Patentanmeldung P 36 32 449.3-Fig.1,2) aufgestellt wird. Im letzteren Fall ist eine bedienungsseitige Abdeckung der Kunststoff-Spritzgießmaschine ausreichend. Bei Aufstellung einer vollautomatischen Kunststoff-Spritzgießmaschine mit Wechseltisch ist eine bedienungsseitige Schutzabdeckung über die ganze Längsseite der Kunststoff-Spritzgießmaschine erforderlich. Die rückseitige Schutzabdeckung kann sich indessen auf die beiden stationären Schutzbleche beschränken, weil die Schutzfunktion der beiden Schutztüren und des mittleren Trägerelementes von der Schutzabdeckung des Wechseltisches übernommen wird.

Die oben genannte Aufgabe wird erfindungsgemäß durch die Merkmale des Patentanspruchs 1 gelöst.

Bei der erfindungsgemäßen Ausbildung sind die Trägersäulen einerseits zentrierend mit den Profilschienen, andererseits mit den Armierungselementen verspannt. Dadurch ist es mit einem sehr geringen Montageaufwand möglich, z.B. die rückwärtige Profilschiene ganz oder hälftig und damit je auch die zugehörigen Schutztüren bedarfsweise abzunehmen, wenn und soweit die Kunststoff-Spritzgießmaschine beispielsweise rückseitig mit Wechseleinrichtungen zu versehen oder in einem entsprechenden Verband mit anderen Kunststoff-Spritzgießmaschinen anzuordnen ist. Zudem weist die erfindungsgemäße Ausbildung hinsichtlich Aufbau, Anordnung und Tragfähigkeit des Traggerüstes die prinzipiellen Voraussetzungen für den Einsatz eines Fahrwerkes zwischen den Profilschienen über der Werkzeugschließ- bzw. Spritzgießeinheit auf. Für die Schaffung dieser Voraussetzungen spielt das C-förmige Querschnittsprofil der Profilschienen eine wesentliche Rolle, das zur vertikalen, durch die Spritzachse der Kunststoff-Spritzgießmaschine gehenden Symmetrieebene hin offen ist.

Der zwischen der bedienungsseitigen und der rückwärtigen Profilschiene vorhandene Raum über der Werkzeugschließeinheit und der Spritzeinheit ist relativ groß, weil die Führungsstangen und die Schutztüren sowie die Trägersäulen innerhalb der Vertikalprojektion der zugehörigen Profilschiene liegen. Dank einer Einleitung der auf den Trägersäulen ruhenden Last über massive Armierungselemente und dank der unmittelbaren Auflage der Profilschiene auf den Trägersäulen ist die Tragfähigkeit des Traggerüstes für jeden denkbaren Bedarf ausreichend.

Bei der erfindungsgemäßen Lösung liegen auch die Voraussetzungen für den symmetrischen Aufbau einer Schutzabdeckung aus standardisierten Bauteilen in bezug auf zwei senkrecht zueinander stehende vertikale Symmetrieebenen vor. Dadurch kann die Serienfertigung im Sinne des Baukastenprinzipis rationalisiert und die Lagerhaltung vereinfacht werden.

Eine rationellere Serienfertigung ist nicht nur dadurch möglich, daß eine höhere Symmetrie der Schutzabdeckung und damit eine Vereinfachung der Fertigung im Sinne des Baukastenprinzips bei günstiger Lagerhaltung vorliegt (Patentanspruch 8). Eine Kostensenkung ist auch dadurch bedingt, daß durch eine entsprechende Höhe der Schutzabdeckungen die bisher übliche obere horizontale Schutzabdeckung der Werkzeugschließeinheit entbehrlich wird (Anspruch 6).

Mit Bezug auf den Oberbegriff des Patentanspruchs 1 ist darauf hinzuweisen, daß es vor dem Aufkommen der gattungsgemäßen Anordnung nicht üblich war, den Bereich des Plastifizierzylinders durch eine Schutztüre abzudecken.

Nachstehend wird die Erfindung anhand der Zeichnung an einem Ausführungsbeispiel erläutert.

Es zeigen:
- Fig. 1: eine bedienungsseitige und eine rückseitige Schutzabdeckung an einer Kunststoff-Spritzgießmaschine in Draufsicht,
- Fig. 2: die Schutzabdeckung gemäß Fig. 1 in Seitenansicht,
- Fig. 3: eine Stirnansicht der auf dem Maschinenfuß angeordneten Schutzabdeckung gemäß Fig. 1 (ohne Werkzeugschließ- und Spritzeinheit sowie ohne stirnseitige Schutzbleche,
- Fig. 4: das Befestigungsstück (23) gemäß Fig. 6 aus Richtung A in vergrößerter Darstellung,
- Fig. 5: die Anordnung gemäß Fig. 6 aus Richtung A,
- Fig. 6: einen Schnitt nach Linie VI-VI von Fig. 5,
- Fig. 7: den Basisabschnitt der Trägersäule in einer Darstellung gemäß Fig. 6 im vertikalen Schnitt,
- Fig. 8: einen Ausschnitt aus der Schutzabdeckung von der Bedienungsseite her in vergrößerter Darstellung,
- Fig. 9: einen Schnitt nach Linie IX-IX von Fig. 6 und
- Fig. 10: die vertikal geschnittene Anordnung gemäß Fig. 8 (mit dem unteren Teil der Schutzabdeckung).

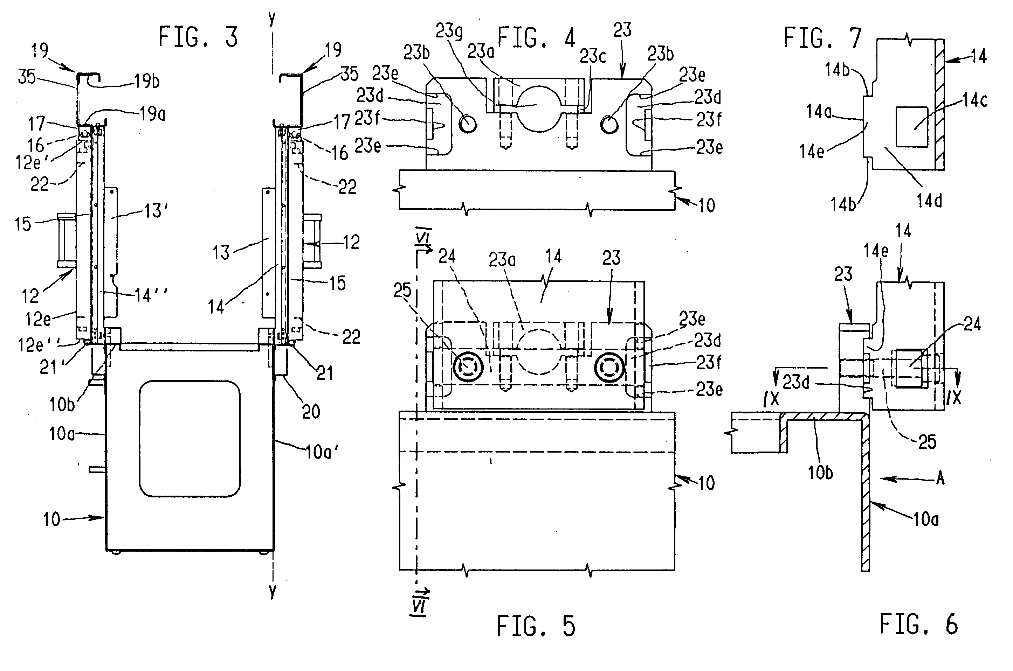

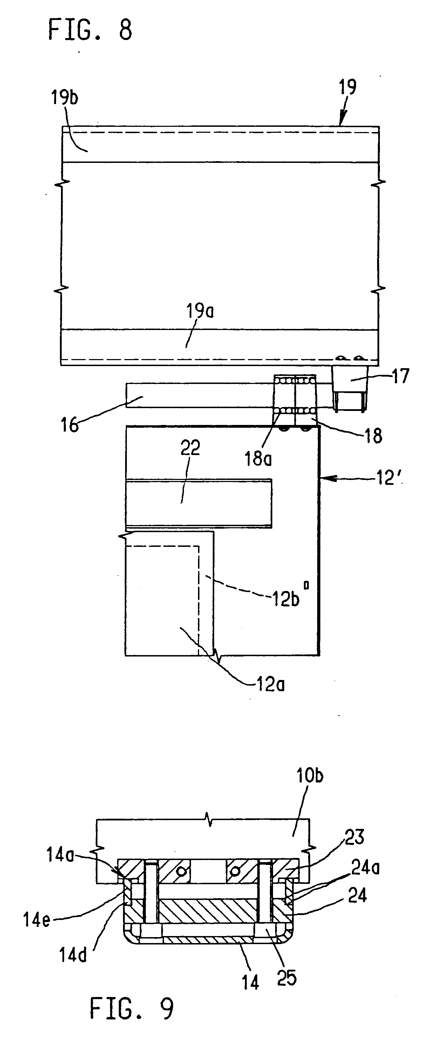

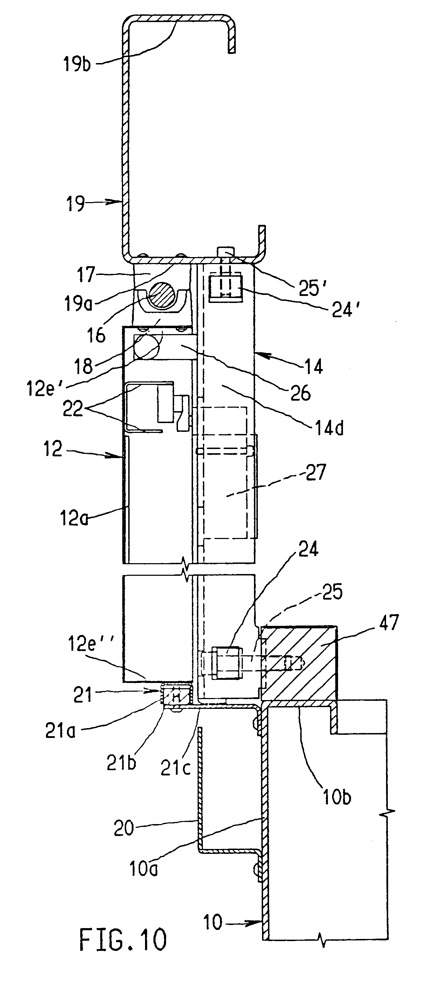

Die Kunststoff-Spritzgießmaschine, an welcher die Schutzabdeckung verwirklicht ist, weist eine horizontale Werkzeugschließeinheit W und eine quer zur Trennfuge 37 des Werkzeuges 36 arbeitende Spritzeinheit S auf. Das quaderförmige Maschinengestell 10 der Kunststoff-Spritzgießmaschine ist aus Stahlblech gefertigt. Vertikale Längswände 10a; 10a′ (Fig. 2,3) begrenzen einen Tankraum 38 und einen Transportraum 40, der vom Tankraum 38 durch eine Querwand 42 getrennt ist. Über der bedienungsseitigen Längswand sind parallel zu dieser zwei vertikale Schutztüren 12; 12′ angeordnet. Eine der beiden Schutztüren liegt im Bereich 43 (Fig. 1) des Werkzeuges 36, die andere Schutztüre in dem Bereich 44 des Plastifizierzylinders 45. Beide Schutztüren 12; 12′ grenzen an ein etwa in der Mitte des Maschinengestells 10 angeordnetes stationäres Schutzelement (Trägerelement 13), das eine Bedienungstastatur für einen direkten manuellen Eingriff trägt. Die Schutztüren 12; 12′ sind in stationären Führungen in gegensätzlicher Richtung aus ihrer Abdeckposition in eine Position verfahrbar, in der sie ein stationäres Schutzblech 15 für das Schließaggregat Ws (Fig. 1) der Werkzeugschließeinheit W und für das Antriebsaggregat Sa der Spritzeinheit überdecken. Über den Schutztüren 12; 12′ ist eine auf Trägersäulen 14 abgestützte Profilschiene 19 aus Stahlblech angeordnet. Die Trägersäulen 14 befinden sich in einem Abstand b (Fig. 1) von dem mittigen stationären Schutzelement (Trägerelement 13). Der genannte Abstand entspricht etwa der in Längsrichtung abgenommenen Abmessung einer Schutztüre 12; 12′. Die stationären Führungen, welche als Führungsstangen 16 ausgebildet werden, sind im Bereich der oberen horizontalen Längskanten der Schutztüren an dieser Profilschiene 19 angeordnet. Die Profilschiene 19 weist ein C-förmiges Querschnittsprofil auf. Sie liegt mit einem unteren, verlängerten, horizontalen Schenkel 19a (Fig. 3,9) auf den Trägersäulen 14 auf. Die Führungsstangen 16 sind mittels Befestigungselementen 17 mit dem Schenkel 19a der Profilschiene 19 verbunden und zwar derart, daß sie außerhalb der vertikalen Ebene y-y (Fig.3) der Längswand 10a des Maschinengestells 10 liegen. Die Schutztüren 12; 12′ hängen mittels kugelgelagerter Trägermuffen 18 an den Führungsstangen 16. Die Trägermuffen 18 greifen an einem oberen, horizontalen Versteifungsrand 12e der betreffenden Schutztüre 12 oder 12′ an. An ihren unteren horizontalen Längskanten sind die Schutztüren 12; 12′ mittels eines stationären Führungsprofils 21b (Fig.9) seitlich geführt. Zu diesem Zweck ist am unteren horizontalen Versteifungsrand 12e jeder Schutztüre 12 bzw. 12′ eine U-Schiene 21a (Fig. 10) befestigt. Die vertikalen Schenkel der U-Schiene 21a übergreifen das mittels einer Trägerleiste 21c an der benachbarten Längswand 10a befestigte stationäre Führungsprofil 21b zur beidseitigen Führung der Schutztüre.

Gemäß einem zeichnerisch nicht dargestellten Ausführungsbeispiel können jedoch auch - gewissermaßen in räumlicher Umkehrung der oberen und unteren stationären Führungen für die Schutztüren - die stationären Führungsstangen 16 entlang der unteren horizontalen Längskanten der Schutztüren 12, 12′ und die stationären Führungsprofile (21b in Fig. 10) an den oberen Längskanten der Schutztüren angeordnet sein. In diesem Falle sind die Führungsstangen 16 an der Längswand 10a des Maschinengestells 10 und die Profilblöcke zur seitlichen Führung (21a in Fig. 10) an einer Profilschiene befestigt, welche funktionell der Profilschiene 19 entspricht. Bei diesem Ausführungsbeispiel 'stehen' demzufolge die Schutztüren 12, 12′ auf den am Maschinengestell befestigten Führungsstangen 16 und sind an ihren oberen Längskanten an den an der Profilschiene befestigten stationären Führungsprofilen (21b in Fig.10) seitlich geführt.

Die je durch ein U-förmiges Querschnittsprofil aus Stahlblech gebildeten Trägersäulen 14 sind auf der Seite der Werkzeugschließeinheit W mit einer Armierungsleiste 47 und auf der Seite der Spritzeinheit S mit einem Befestigungsstück 23 zentrierend verspannbar. Die im Querschnitt etwa quadratische Armierungsleiste 47 ist wie das Befestigungsstück 23 auf dem horizontal eingebogenen Rand 10b (Fig. 3,6,10) der Längswand 10a angeordnet. Die Armierungsleiste, an welcher die Werkzeugschließeinheit W als Ganzes zentrierbar ist, bildet eine Rollbahn für die Stützeinrichtung (Fig. 1) des bewegbaren Formträgers. Die Trägersäulen 14 sind je mittels eines in ihren Schenkeln 14d (Fig. 7,9,10) abgestützten Spannstückes 24 und mittels horizontal eingesetzter Spannschrauben 25 mit der Armierungsleiste 47 bzw. mit dem Befestigungsstück 23 verspannbar. Wie insbesondere aus den Figuren 6,7,9,10 erkennbar, sind die Schenkel 14d der Trägersäulen 14 mit Ausnehmungen 14c versehen. Die freien Enden des Spannstückes tauchen in diese Ausnehmungen ein (Fig. 9) und legen sich beim Spannvorgang mit einer Schulter im Spannbereich 24a zur Abstützung an korrespondierende Anlageflächen der Schenkel 14d an. Die Spannschrauben 25, welche sich im Gewindeeingriff mit der Armierungsleiste 47 bzw. mit dem Befestigungsstück 23* befinden, durchsetzen das Spannstück 24 mit Spiel, so daß die Trägersäulen 14 durch das Anziehen der Spannschrauben 25 mit der Armierungsleiste 47 bzw. mit dem Befestigungsstück 23 verspannbar sind. Bei der Verspannung greifen Zentrierprofile 14e in korrespondierende Zentrierausnehmungen der Armierungsleiste 47 bzw. des Befestigungsstückes 23 zur Zentrierung ein. Wie insbesondere aus Fig. 10 erkennbar, sind die oberen Enden der Trägersäulen 14 je mittels eines in ihren Schenkeln 14d (Fig. 7,9,10) abgestützten Spannstückes 24′ und mittels vertikal eingesetzter Spannschrauben 25′ mit dem unteren Schenkel 19a der Profilschiene 19 verspannbar. Dabei sind die Spannstücke 24′ in Ausnehmungen der Schenkel 14d in gleicher Weise abgestützt wie die Spannstücke 24 am unteren Ende der Trägersäulen 14. Die Verspannung geschieht durch Anziehen der Spannschrauben 25′, die mit den Spannstücken 24′ im Gewindeeingriff stehen.
* (vergl. hierzu Gewindebohrungen 23b in Fig. 4)

Das von den beiden Schutztüren 12, 12′ beidseits begrenzte, als Trägerelement 13 ausgebildete Schutzelement (Fig. 2) ist am stationären Formträger 41 (Fig. 1) befestigt. Das aus Stahlblech gefertigte Trägerelement 13 weist ebenfalls einen U-förmigen Querschnitt auf. Zur Befestigung weist einer seiner Schenkel 13d im Bereich des stationären Formträgers 41 einen Befestigungsstreifen 13d′ auf, der mit dem benachbarten Abschnitt eines Versteifungsschildes des stationären Formträgers 41 verschraubbar ist.

Am oberen Ende ist das Trägerelement 13, wie die Trägersäulen 14, mittels eines in seinen Schenkeln 13d abgestützten Spannstückes und mittels vertikal eingesetzter Spannschrauben mit dem unteren Schenkel 19a der Profilschiene 19 verspannbar (in der Zeichnung nicht erkennbar). Die Profilschiene 19 ist aus zwei identischen Schienenabschnitten zusammengefügt. Somit ergibt sich für die Schutzabdeckung eine quer zur Längswand 10a des Maschinengestelles 10 stehende Symmetrieebene g-g (Fig. 1, 2). Die beiden Profilabschnitte der Profilschiene 19 sind mit Hilfe eines Verbindungsstükkes 35 miteinander verschraubt (Fig. 2). Die Profilabschnitte der Profilschiene 19 überragen das Machinengestell 10 stirnseitig um wenigstens ein Drittel ihrer Länge. Die durch die Höhe der Schutztüren 12, 12′ und der Trägermuffen 18 sowie der Profilschiene 19 bestimmte Höhe der Schutzabdeckung übersteigt die Höhe des Maschinengestells 10 um etwa ein Drittel. Die Schutztüren 12, 12′ als solche sind etwa so hoch wie das Maschinengestell 10. Die horizontalen Schenkel 19a, 19b der Profilschiene 19 sind je um 90° nach innen umgebogen,wie aus Fig. 10 ersichtlich.

Das die Profilschiene 19 und die Trägersäulen 14 sowie das Trägerelement 13 umfassende Traggerüst für die Schutztüren 12, 12′ und für die Schutzbleche 15 liegt außerhalb der vertikalen Ebene y-y (Fig. 3) der Längswand 10a. Der vertikale Schenkel eines als Kabelkanal dienenden Winkelbleches 20 liegt mit der rückseitigen Oberfläche der Schutztüren 12, 12′ in einer vertikalen Ebene, wie insbesondere aus Fig. 10 ersichtlich.

Im zeichnerisch dargestellten Ausführungsbeispiel ist über der rückwärtigen Längswand 10a′ (Fig. 3) des Maschinengestelles 10 eine Schutzabdeckung angeordnet, welche identisch ist mit der Schutzabdeckung über der bedienungsseitigen Längswand 10a. Die beiden identischen Schutzabdeckungen auf den beiden Längswänden 10a, 10a′ liegen symmetrisch zu einer vertikalen Symmetrieebene f-f (Fig. 1) der Kunststoff-Spritzgießmaschine. Somit sind vier Schienenabschnitte (zur Bildung der beiden Profilschienen 19), vier stationäre Schutzbleche 15, vier Trägersäulen 14 und die zugehörigen jeweiligen Befestigungsorgane, ferner vier Führungsstangen 16 und die zugehörigen Befestigungsorgane sowie vier Schutztüren 12, 12′ (ohne Handgriff und ohne Schaltleisten) je durch identische Bauteile gebildet. Die Schutztüren 12, 12′ weisen je einen etwa rechteckigen, aus Stahlblech gefertigten Rahmen 12d von U-förmigem Profil auf. Mit dem Rahmen ist das zugehörige Sichtfenster 12a in einem Klebebereich 12b verklebt. Zur Steuerung von an den Trägersäulen 14 befestigten Schaltern (z.B. Endschalter 27 in Fig. 9) sind in den horizontalen Abschnitten des Rahmens 12d jeder Schutztüre Schaltleisten 22 derart befestigt, daß die Schaltleiste 22 der linken Schutztüre 12 spiegelsymmetrisch zur Schaltleiste 22′ der anderen Schutztüre 12′ angeordnet ist.

Die bedienungsseitige und die rückseitige Schutzabdeckung sind durch stirnseitige Schutzbleche 15 (Fig.1) miteinander verbunden, die identisch sind mit den stationären Schutzblechen 15 über den Längswänden 10a, 10a′ des Maschinengestells 10.

Der Verschiebeweg der Schutztüren 12, 12′ ist mit Hilfe eines an der zugehörigen Trägersäule 14 befestigten Doppelanschlages 26 begrenzt, der im Bereich des horizontalen Versteifungsrandes 12e des Rahmens 12d der betreffenden Schutztüre in diesen Rahmen 12d eintaucht (Fig. 2,10). Das Befestigungsstück 23 dient nicht nur als Spannsockel für die Trägersäule 14 auf der Seite der Spritzeinheit S. Wie aus Fig. 4,5 erkennbar, ist in ihm auch eine Lagerbohrung 23g zur Aufnahme einer Führungssäule zum horizontalen Verschieben der Spritzeinheit auf dem Maschinengestell 10 vorgesehen. Die Führungssäule 46 ist mittels eines Spannelementes 23a in der Lagerbohrung 23g verspannbar. Das Spannstück 23a ist über einen Verbindungssteg 23c mit dem übrigen Korpus des Befestigungsstückes 23 verbunden. Dieser Verbindungssteg 23c wird nur dann zur Freisetzung des Spannstückes 23 durchgetrennt, wenn das Erfordernis einer Verschiebung der Spritzeinheit quer zur Spritzachse und somit der Anordnung der Führungssäule 46 besteht. Art und Anordnung der Zentrierausnehmungen im Befestigungsstück , in welche das Zentrierprofil 14e der Trägersäule 14 zur Zentrierung eintaucht, sind insbesondere aus den Figuren 4 und 5 erkennbar: randständige stirnseitige Auflageflächen 23d, an welchen Anlagekanten 14a (Fig.7) der Schenkel 14d der Trägersäulen 14 anliegen, sind von Zentrierflächen 23e für eine vertikale Zentrierung und von Zentrierflächen 23f für eine horizontale Zentrierung der Trägersäule 14 begrenzt. Diese Zentrierflächen 23e,23f korrespondieren mit den Zentrierkanten 14b und den Seitenflanken des Zentrierprofils 14e.

## Patentansprüche

1. Schutzabdeckung an einer Kunststoff-Spritzgießmaschine mit horizontaler Werkzeugschließeinheit (W) und quer zur Trennfuge (37) des Werkzeuges (36) arbeitender Spritzeinheit (S), sowie mit einem quaderförmigen Maschinengestell (10) aus Stahlblech, dessen vertikale Längswände (10a;10a') Innenräume (38;40) begrenzen, mit zwei vertikalen, über der bedienungsseitigen Längswand (10a) und parallel zu dieser angeordneten Schutztüren (12;12'), von welchen die eine den Bereich (43) des Werkzeuges (36) und die andere den Bereich (44) des Plastifizierzylinders (45) abdeckt, wobei beide Schutztüren (12;12') an ein etwa in der Mitte des Maschinengestells (10) angeordnetes stationäres Trägerelement (13) angrenzen und in stationären oberen Führungen (Führungsstangen 16 bzw. Führungsprofile 21b) und unteren Führungen (Führungsprofile 21b bzw. Führungsstangen 16) in gegensätzlicher Richtung aus ihrer Abdeckposition verfahrbar sind, sowie mit vertikalen, auf dem Maschinengestell abgestützten Trägersäulen (14) für die stationären Führungen der Schutztüren (12;12'), welche Trägersäulen (14) sich in einem Abstand (b) von dem mittigen stationären Trägerelement (13) befinden, welcher etwa der in Längsrichtung abgenommenen Abmessung einer Schutztüre entspricht, sowie mit Profilschienen (19) aus Stahlblech über der bedienungsseitigen (10a) und der rückwärtigen Längswand (10a') des Maschinengestells (10) welche Profilschienen (19) mit den Trägersäulen (14) ein Traggerüst für die Schutztüren (12,12') bilden,
dadurch gekennzeichnet, daß die Profilschienen (19) ein C-förmiges Querschnittsprofil aufweisen und mit unteren, horizontalen Schenkeln (19a) auf den Trägersäulen (14) aufliegen, an welchen Schenkeln (19a) die oberen Führungen (Führungsstangen 16 bzw. Führungsprofile 21b) im Bereich der oberen horizontalen Längskanten der Schutztüren (12;12') befestigt sind, welche mittels Trägermuffen (18) an den bzw. auf den als Führungsstangen (16) aufgebildeten Führungen hängen bzw. stehen und daß die Trägersäulen (14) oben mittels Spannstücken (24') mit den unteren Schenkeln (19a) der Profilschiene (19) und unten mittels Spannstücken (24) mit massiven Armierungselementen (47;23) zentrierend verspannbar sind, welche auf horizontal eingebogenen Rändern (10b) der Längswände (10a;10a') angeordnet sind.

2. Schutzabdeckung nach Patentanspruch 1, dadurch gekennzeichnet, daß an den Schenkeln (19a) außerhalb der vertikalen Ebene (y-y.) der Längswand (10a) des aus Stahlblech gebildeten, quaderförmigen Maschinengestells (10) Führungsstangen (16) als stationäre Führungen befestigt sind.

3. Schutzabdeckung nach Patentanspruch 2, dadurch gekennzeichnet, daß die Schutztüren (12;12') mittels kugelgelagerter Trägermuffen (18) die an der Oberfläche eines oberen horizontalen Versteifungsrandes (12e) jeder Schutztüre (12;12') befestigt sind, an den Führungsstangen (16) hängen und an ihren unteren horizontalen Längskanten mittels eines stationären Führungsprofils (21b) seitlich geführt sind, an dem ein aus einer Profilschiene mit U-förmigem Querschnitt gebildetes Führungselement (U-Schiene 21a) geführt ist, das an der Oberfläche eines unteren horizontalen Versteifungsrandes (12e) jeder Schutztüre angeordnet ist und deren vertikale Schenkel das als Formblock ausgebildete und an der Längswand (10a) befestigte stationäre Führungsprofil (21b) zur beidseitigen Führung übergreifen.

4. Schutzabdeckung nach einem der vorhergehenden Patentansprüche, dadurch gekennzeichnet, daß die je durch ein U-förmiges Querschnittsprofil aus Stahlblech gebildeten Trägersäulen je mittels eines in ihren Schenkeln (14d) abgestützten Spannstückes (24) und mittels horizontal eingesetzter Spannschrauben (25) mit massiven Armierungselementen (Armierungsleiste 47; Befestigungsstück 23) zentrierend verspannbar sind, welche Spannschrauben (25) das Spannstück (24) mit Spiel durchsetzen, wobei Zentrierprofile (14b) der Schenkel (14d) in korrespondierende Zentrierausnehmungen der Armierungselemente zur Zentrierung eingreifen und daß die Trägersäulen (14) je mittels eines in ihren Schenkeln (14d) abgestützten Spannstückes (24') und mittels vertikaler eingesetzter Spannschrauben (25') mit dem unteren Schenkel (19a) der Profilschiene (19) verspannbar sind, welche Spannschrauben (25') mit den Spannstücken (24') im Gewindeeingriff stehen.

5. Schutzabdeckung nach einem der vorhergehenden Patentansprüche, dadurch gekennzeichnet, daß das durch ein U-Profil aus Stahlblech gebildete und am stationären Formträger (41) befestigte Schutzelement als Trägerelement (13) mittels eines an seinen Schenkeln (13d) abgestützten Spannstückes und mittels vertikal eingesetzter Spannschrauben mit dem unteren U-Schenkel (19a) der Profilschiene (19) verspannbar ist.

6. Schutzabdeckung nach einem der vorhergehenden Patentansprüche, dadurch gekennzeichnet, daß die Profilschiene (19) aus zwei identischen Schienenabschnitten zusammengefügt ist, welche das Maschinengestell (10) stirnseitig um wenigstens ein Drittel ihrer Länge überragen und daß die durch die Höhe der Schutztüren (12;12'), der Trägermuffen (18) sowie der Profilschiene (19) bestimmte Höhe der Schutzabdeckung die Höhe des Maschinengestells (10) um ca. ein Drittel übersteigt, wobei die Schutztüren (12;12') etwa so hoch sind wie das Maschinengestell (10).

7. Schutzabdeckung nach einem der vorhergehenden Patentansprüche, dadurch gekennzeichnet, daß das die Profilschiene (19) und die Trägersäulen (14) umfassende Traggerüst für die Schutztüren (12;12') und die Schutzbleche (15) außerhalb der vertikalen Ebene (y-y) der Längswand (10a) liegt, wobei der vertikale Schenkel eines als Kabelkanal dienenden Winkelbleches (20) mit der rückseitigen Oberfläche der Schutztüren (12;12') in einer vertikalen Ebene liegt.

8. Schutzabdeckung nach einem der vorhergehenden Patentansprüche, dadurch gekennzeichnet, daß über der rückwärtigen Längswand (10a') des Maschinengestells (10) eine weitere Schutzabdeckung angeordnet ist, welche identisch ist mit der Schutzabdeckung über der bedienungsseitigen Längswand (10a), und daß diese identischen Schutzabdeckungen symmetrisch zur vertikalen Symmetrieebene (f-f) der Kunststoff-Spritzgießmaschine liegen, wobei vier Schienenabschnitte (zur Bildung von zwei Profilschienen 19), vier stationäre Schutzbleche (15), vier Trägersäulen (14), vier Führungsstangen (16), sowie vier Schutztüren (ohne Handgriffe und ohne Schaltleisten) je durch identische Bauteile gebildet sind und wobei die Befestigungs- und Führungsorgane dieser Bauteile als solche miteinander identisch sind, und daß diese identischen Schutzabdeckungen auf der bedienungsseitigen und der rückseitigen Längswand (10a;10a') des Maschinengestells (10) durch stirnseitige Schutzbleche (15) miteinander verbunden sind, die identisch sind mit den stationären Schutzblechen über den Längswänden (10a;10a') des Maschinengestells (10).

## Claims

1. Protective covering for a plastics material injection moulding machine, including a horizontal mould securing unit (W) and an injecting unit (S), which operates transversely relative to the parting line (37) of the mould (36), and including a rectangular machine base (10) formed from sheet steel, the vertical longitudinal walls (10a; 10') of which base define chambers (38; 40), including two vertical protective doors (12; 12'), which are disposed over and parallel to the longitudinal wall (10a) on the operator's side, one of said doors covering the region (43) of the tool (36) and the other door covering the region (44) of the plasticizing cylinder (45), the two protective doors (12; 12') adjoining a stationary carrier (13), which is disposed substantially in the centre of the machine base (10), and being displaceable in opposite directions from their covering position in stationary, upper guide means (guide rods 16 and guide profiles 21b respectively) and lower guide means (guide profiles 21b and guide rods 16 respectively), and also including vertical support columns (14), which are supported on the machine base, for supporting the stationary guide means of the protective doors (12; 12'), said support columns (14) being spaced a distance (b) from the central, stationary carrier (13), said distance corresponding substantially to the dimension of a protective door measured in the longitudinal direction, and also including profiled bars (19) formed from sheet steel over the wall (10a) on the operator's side and the rear longitudinal wall (10a') of the machine base (10), which profiled bars (19) form with the support columns (14) a support base for the protective doors (12, 12'), characterised in that the profiled bars (19) have a C-shaped cross-sectional profile and lie, with lower, horizontal flanges (19a), on the support columns (14), on which flanges (19a) the upper guide means (guide rods 16 and guide profiles 21b respectively) are secured in the region of the upper, horizontal longitudinal edges of the protective doors (12; 12'), which are suspended from, or respectively situated on the guide means, which are in the form of guide rods (16), by means of carrying sleeves (18), and in that the upper end of the support columns (14) is centeringly clampable to the lower flanges (19a) of the profiled bar (19) by means of clamping members (24'), and the lower end of said columns is centeringly clampable to solid reinforcing elements (47; 23) by means of clamping members (24), which reinforcing elements are disposed on horizontally inturned flanges (10b) of the longitudinal walls (10a; 10a').

2. Protective covering according to claim 1, characterised in that guide rods (16) are secured as stationary guide means on the flanges (19a) externally of the vertical plane (y-y) of the longitudinal wall (10a) of the rectangular machine base (10), which is formed from sheet steel.

3. Protective covering according to claim 2, characterised in that the protective doors (12; 12') are suspended from the guide rods (16) by means of carrying sleeves (18), which are mounted by means of ball bearings and are secured on the surface of an upper, horizontal reinforcing flange (12e) of each protective door (12; 12'), and said sleeves are laterally guided on their lower horizontal longitudinal edges by means of a stationary guide profile (21b), on which a guide element (U-shaped bar 21a) is guided, said element being formed from a profiled bar having a U-shaped cross-section and being disposed on the surface of a lower, horizontal reinforcing flange (12e) of each protective door, and the vertical flanges of said guide element overlap the stationary guide profile (21b) for bilateral guidance, which profile is in the form of a shaped block and is secured on the longitudinal wall (10a).

4. Protective covering according to one of the preceding claims, characterised in that the support columns, which are each formed by a sheet metal profile having a U-shaped cross-section, are each centeringly clampable to solid reinforcing elements (reinforcing bar 47; fixing member 23) by means of a respective clamping member (24), which is supported in the flanges (14d) of said columns, and by means of horizontally inserted clamp screws (25), which clamp screws (25) extend through the clamping member (24) with clearance, centering profiles (14b) of the flanges (14d) engaging in corresponding centering recesses in the reinforcing elements for centering purposes, and in that the support columns (14) are each clampable to the lower flange (19a) of the profiled bar (19) by means of a respective clamping member (24'), which is supported in the flanges (14d) of said columns, and by means of vertically inserted clamp screws (25'), which clamp screws (25') are in threaded engagement with the clamping members (24').

5. Protective covering according to one of the preceding claims, characterised in that the supporting element, which is formed by a U-shaped profile of sheet steel and is secured on the stationary mould carrier (41), is clampable, as carrier (13), to the lower U-shaped flange (19a) of the profiled bar (19) by means of a clamping member, which is supported on the flanges (13d) of said carrier, and by means of vertically inserted clamp screws.

6. Protective covering according to one of the preceding claims, characterised in that the profiled bar (19) is a combination of two identical bar portions, which protrude beyond the front end of the machine base (10) by at least one-third of their length, and in that the height of the protective covering, which is determined by the height of the protective doors (12; 12'), the carrier sleeves (18) and the profiled bar (19), exceeds the height of the machine base (10) by approx. one-third, the protective doors (12; 12') being substantially as high as the machine base (10).

7. Protective covering according to one of the preceding claims, characterised in that the support base, which comprises the profiled bar (19) and the support columns (14), for supporting the protective doors (12; 12') and the guard plates (15) lies externally of the vertical plane (y-y) of the longitudinal wall (10a), the vertical flange of an angular plate (20), which serves as a cable duct, lying with the rear surface of the protective doors (12; 12') in a vertical plane.

8. Protective covering according to one of the preceding claims, characterised in that an additional protective covering is disposed over the rear longitudinal wall (10a') of the machine base (10), which additional covering is identical to the protective covering over the longitudinal wall (10a) on the operator's side, and in that these identical protective coverings lie symmetrically relative to the vertical plane of symmetry (f-f) of the plastics material injection moulding machine, four bar portions (to form two profiled bars 19), four stationary guard plates (15), four support columns (14), four guide rods (16) and four protective doors (without handles and without contact bars) each being formed by identical component parts, and the fixing and guide means of these component parts being identical to one another as such, and in that these identical protective coverings are interconnected on the longitudinal wall (10a) on the operator's side and on the rear longitudinal wall (10a; 10a') of the machine base (10) by means of guard plates (15) which are situated on the end faces and are identical to the stationary guard plates over the longitudinal walls (10a; 10a') of the machine base (10).

## Revendications

1. Recouvrement de protection sur une machine à injection de matières plastiques, possédant une unité horizontale de fermeture du moule (W) et une unité d'injection (S) agissant transversalement au joint (37) du moule (36), ainsi qu'un bâti de machine (10) en tôle d'acier, de forme parallélépipédique, dont les parois longitudinales verticales (10a; 10a') délimitent des compartiments intérieurs (38; 40), recouvrement qui comprend deux portes de protection verticales (12; 12') disposées au-dessus de la paroi longitudinale (10a) côté commande et parallèles à cette paroi, dont l'une recouvre la zone (43) du moule (36) et l'autre recouvre la zone (44) du cylindre de plastification (45), las deux portes de protection (12; 12') étant voisines d'un élément porteur stationnaire. (13) placé à peu près au milieu du bâti (10) de la machine et étant déplaçables suivant des directions opposées à partir de leur position de recouvrement dans des guides supérieurs stationnaires (barres glissières 16 ou profils de guidage 21b) et dans des guides stationnaires inférieurs (profils de guidage 21b ou barres glissières 16), ainsi que des colonnes porteuses verticales (14) appuyées sur le bâti de la machine, pour les guides stationnaires des portes de protection (12; 12'), colonnes porteuses (14) qui se trouvent à une distance (b) de l'élément porteur stationnaire (13) central qui correspond à peu près à la dimension mesurée dans le sens de la longueur d'une porte de protection, de même que des rails profilés (19) en tôle d'acier situés au-dessus de la paroi longitudinale (10a) côté commande et de la paroi longitudinale (10a') du côté arrière du bâti (10) de la machine et qui forment avec les colonnes porteuses (14) une charpente de support pour les portes de protection (12; 12'),
caractérise en ce que les rails profilés (19) présentent un profil en forme de C en section droite et reposent par des ailes horizontales inférieures (19a) sur les colonnes porteuses (14), ailes (19a) auxquelles les guides supérieurs (barres glissières 16 ou profits de guidage 21b) sont fixés dans la zone des bords longitudinaux horizontaux en haut des portes de protection (12; 12'), lesquelles sont suspendues par des manchons supports (18) aux guides réalisés sous forme de barres glissières (16), ou sont placées debout sur les guides réalisés sous forme de barres glissières (16), et que les colonnes porteuses (14) peuvent être assemblées par serrage et avec un effet de centrage, en haut au moyen de pièces de serrage (24') aux ailes inférieures (10a) des rails profilés (19) et, en bas, au moyen de pièces de serrage (24) à des éléments d'armature massifs (47; 23) disposés sur des bords (10b) recourbés horizontalement vers l'intérieur des parois longitudinales (10a; 10a').

2. Recouvrement de protection selon la revendication 1, caractérisé en ce que des barres glissières (16), servant de guides stationnaires, sont fixées aux ailes (19a) à l'extérieur du plan vertical (y-y) de la paroi longitudinale (10a) du bâti de machine (10) réalisé en tôle d'acier et de forme parallélépipédique.

3. Recouvrement de protection selon la revendication 2, caractérisé en ce que les portes de protection (12; 12') sont suspendues aux barres glissières (16) au moyen de manchons supports (18) montés sur billes et fixés à la surface d'un bord raidisseur horizontal (12e) en haut de chaque porte de protection (12; 12') et sont guidées latéralement, à leurs bords longitudinaux horizontaux en bas, au moyen d'un profit de guidage stationnaire (21b), sur lequel est guidé un élément de guidage (rail en U 21a), formé d'un rail profité ayant une section droite en forme de U, qui est disposé sur la surface d'un bord raidisseur horizontal (12e) en bas de chaque porte de protection et dont les ailes verticales s'étendent par-dessus le profil de guidage stationnaire (21b) réalisé sous la forme d'un bloc façonné et fixé à la paroi longitudinale (10a), en vue du guidage bilatéral.

4. Recouvrement de protection selon une des revendications précédentes, caractérisé en ce que les colonnes porteuses, formées chacune d'un profil à section droite de forme en U en tôle d'acier, peuvent être assemblées chacune par serrage, avec un effet de centrage, au moyen d'une pièce de serrage (24) appuyée dans leurs ailes (14d) et au moyen de vis se serrage (25) engagées horizontalement, avec des éléments d'armature massifs (barre d'armature 47; pièce de fixation 23), les vis de serrage (25) traversant la pièce de serrage (24) avec jeu et des profils de centrage (14b) des ailes (14d) pénétrant dans des évidements de centrage correspondants des éléments d'armature à des fins de centrage, et que les colonnes porteuses (14) peuvent être assemblées chacune par serrage à l'aile inférieure (19a) du rail profilé (19) au moyen d'une pièce de serrage (24') appuyée dans les ailes (14d) des colonnes et au moyen de vis de serrage (25') engagées verticalement, les vis de serrage (25') étant vissées dans les pièces de serrage (24').

5. Recouvrement de protection selon une des revendications précédentes, caractérisé en ce que l'élément de protection, formé par un profil en U en tôle d'acier et fixé au porte-moule stationnaire (41), peut être assemblé par serrage à l'aile inférieure (19a) du U du rail profilé (19) au moyen d'une pièce de serrage appuyée sur les ailes (13d) de cet élément de protection et au moyen de vis de serrage engagées verticalement.

6. Recouvrement de protection selon une des revendications précédentes, caractérisé en ce que le rail profilé (19) est composé de deux tronçons de rail identiques qui dépassent d'au moins un tiers de leur longueur des extrémités du bâti (10) de la machine, et que la hauteur du recouvrement de protection, fixée par la hauteur des portes de protection (12; 12'), des manchons supports (18) ainsi que du rail profilé (19), dépasse d'un tiers environ la hauteur du bâti (10), les portes de protection (12,. 12') ayant à peu près la même hauteur que le bâti (10) de la machine.

7. Recouvrement de protection selon une des revendications précédentes, caractérisé en ce que la charpente de support pour les portes de protection (12; 12') et les tôles de protection (15), charpente qui comprend le rail profilé (19) et les colonnes porteuses (14), est située à l'extérieur du plan vertical (y-y) de la paroi longitudinale (10a), l'agencement étant tel que l'aile verticale d'une tôle coudée (20) servant de conduit de câbles, est située dans le même plan vertical que la face arrière des portes de protection (12; 12').

8. Recouvrement de protection selon une des revendications précédentes, caractérisé en ce qu'un recouvrement de protection supplémentaire, identique au recouvrement de protection au-dessus de la paroi longitudinale (10a) côté commande, est disposé au-dessus de la paroi longitudinale arrière (10a') du bâti (10) de la machine, et que ces recouvrements de protection identiques sont placés symétriquement par rapport au plan de symétrie vertical (f-f) de la machine à injection de matières plastiques, avec constitution de quatre tronçons de rail (pour la formation de deux rails profilés 19), quatre tôles de protection stationnaires (15), quatre colonnes porteuses (14), quatre barres glissières (16) ainsi que quatre portes de protection (sans poignées et sans barres de commutation) chaque fois par des pièces identiques, et avec utilisation d'organes de fixation et de guidage identiques pour ces pièces, et que ces recouvrements de protection identiques sur les parois longitudinales (10; 10a') du côté commande et du côté arrière du bâti (10), sont reliés entre eux par des tôles de protection (15) placées aux extrémités et identiques aux tôles de protection stationnaires au-dessus des parois longitudinales (10a; 10a') du bâti (10) de la machine.
